# EUROPÄISCHE PATENTSCHRIFT

(11) **EP 0 632 552 B1**
(45) Veröffentlichungstag und Bekanntmachung des Hinweises auf die Patenterteilung: **13.08.1997**
(21) Anmeldenummer: 94107116.9
(22) Anmeldetag: 06.05.1994
(51) Int. Cl.: H01S 3/06, H01S 3/098, H01S 3/13

(54) **Aktiv modengekoppelter Faserlaser**
Active mode-locked fiber laser
Laser à fibre optique à blocage actif de mode

(30) Priorität: 27.05.1993 DE 4317667
(43) Veröffentlichungstag der Anmeldung: 04.01.1995
(73) Patentinhaber: ALCATEL ALSTHOM COMPAGNIE GENERALE D'ELECTRICITE, 75008 Paris (FR)
(72) Erfinder: Pfeiffer, Thomas, D-70569 Stuttgart (DE)
(74) Vertreter: Schätzle, Albin, Dipl.-Phys.

(56) Entgegenhaltungen:
- US-A- 4 025 875
- US-A- 5 132 976
- ELECTRONICS LETTERS., Bd.28, Nr.2, 16. Januar 1992, ENAGE GB Seiten 182 - 184, XP000280611 X.SHAN ET AL. 'Stabilizing Er fibre soliton laser with pulse shape locking'
- OPTICS LETTERS., Bd.18, Nr.2, Januar 1993, NEW YORK US Seiten 107 - 109, XP000331296 G.T.HARVEY ET AL. 'Harmonically mode-locked fiber ring laser with an internal Fabry-Perot stabilizer for soliton transmission'

## Beschreibung

Die Erfindung betrifft einen aktiv modengekoppelten Faserlaser nach Anspruch 1.

Aktiv modengekoppelte Faserlaser als solche sind, z.B. aus Electronics Letters, 24th October 1991, Vol 27, No. 22, bekannt. Der aus der o.g. Schrift bekannte Faserlaser ist als aktiv modengekoppelter Faserringlaser mit einem optischen Verstärker ausgebildet. Die aktive Modensynchronisation des Faserringlasers erfolgt bekanntermaßen durch eine Modulation des Lasers mit einer Frequenz, die nahezu gleich der reziproken Umlaufzeit des Lichtes durch den Faserresonator ist. Die Modulationsfrequenz und die Umlauffrequenz der optischen Pulse im Laserresonator müssen sehr genau aufeinander abgestimmt sein, um kurze Pulse mit hohen Amplitudenwerten zu erhalten.

Bei einer Verlußtmodulation, wie sie z.B. bei einer Verwendung eines Mach-Zehnder-Interferometers als Modulator vorliegt, darf die Modulationsfrequenz höchstens 10⁻⁶ von der Impulsfolgefrequenz abweichen, um eine "gute Pulsqualität", d.h. periodisch stabile Pulse mit einer Pulsdauer im Bereich einiger Pikosekunden, zu erhalten.

Bei der Verwendung eines modengekoppelten Faserlasers als Lichtquelle für kurze Pulse, z.B. in einem Nachrichtenübertragungssystem, ist es nun erforderlich, daß der Faserlaser synchron zu einem externen Takt arbeiten kann.

In Electronics Letters, Bd. 28, Nr. 2, 16. Januar 1992, Seiten 182 bis 184, ist ein modengekoppelter Faserlaser zur Erzeugung kurzer Pulse beschrieben. Der Faserlaser beinhaltet einen optischen Verstärker, einen Faserresonator, einen mit einem externen Takt angesteuerten Modulator und ein Mittel zur Änderung der optischen Weglänge des Faserresonators. In einer Regeleinrichtung wird aus dem Ausgangssignal des Faserlasers ein Regelsignal für das Mittel zur Änderung der optischen Weglänge des Faserresonators abgeleitet, mittels dessen die Impulsfolgefrequenz der kurzen Pulse auf den externen Takt synchronisiert wird. Als Maß für den Grad der Synchronisation dient die relative Phasenlage eines elektrischen Signals, das über eine Pin-Diode, einen elektrischen Verstärker und ein Bandpaßfilter aus dem Ausgangssignal des Faserlasers gewonnen wird, zu der Phasenlage des externen Takts. Das Regelsignal wird mittels eines Frequenzmixers und einer Verzögerungseinheit erzeugt.

Der Erfindung liegt daher die Aufgabe zugrunde einen modengekoppelten Faserlaser zu schaffen, dessen Impulszüge synchron zu einem externen Takt sind.

Die Aufgabe wird durch die Lehre des Anspruchs 1 gelöst.

Vorteilhafte Ausgestaltungen sind den abhängigen Ansprüchen zu entnehmen.

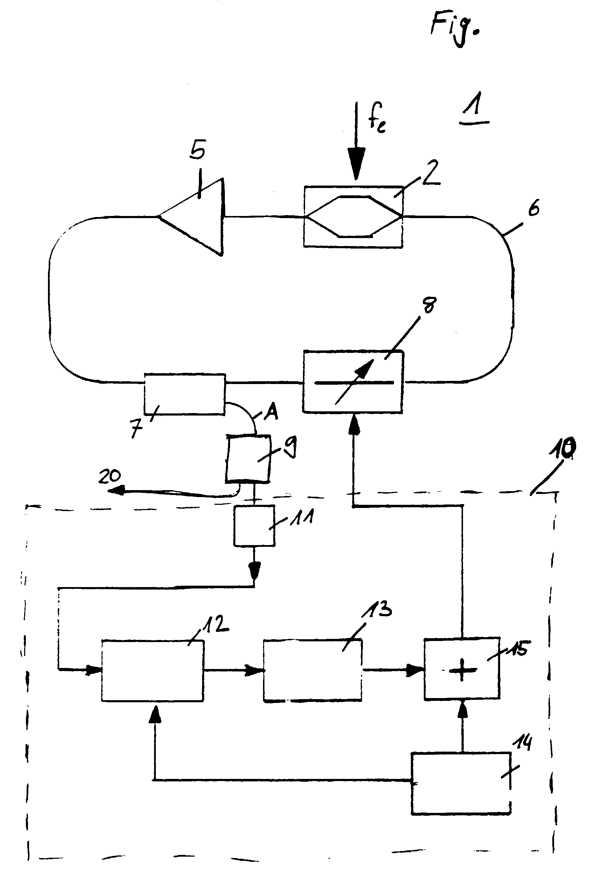

Zum verbesserten Verständnis der Erfindung ist ein Ausführungsbeispiel anhand einer Figur beschrieben. Die Figur zeigt die schematische Abbildung eines Ausführungsbeispiels.

Das in der Figur abgebildete Ausführungsbeispiel zeigt ein aktiv modengekoppelten Faserringlaser 1, der synchron zu einem externen Takt betreibbar ist. Der Faserringlaser 1 weist hierzu einen Modulator 2 in Form eines Mach-Zehnder-Interferometers zum Einkoppeln des externen Taktsignals mit der Frequenz f_{c} in einen Ringresonator 6 auf. Ferner sind mit dem als Faserresonator ausgebildeten Ringresonator 6 ein optischer Verstärker 5 mit Pumplaser, eine Auskoppelvorrichtung 7 zum Auskoppeln des Ausgangssignals A und ein Mittel 8 zur Änderung der optischen Weglänge L des Ringresonators 6 verbunden. Mit der Auskoppelvorrichtung 7 ist eine weitere Koppelvorrichtung 9 verbunden, durch die ein Teil des Ausgangsignals A einem Regelkreis 10 zum Steuern des Mittels 8 zugeführt wird.

Als optischer Verstärker 5 wird ein Faserverstärker, z.B. ein erbiumdotierter Faserverstärker verwendet. Die Koppelvorrichtungen 7 und 9 sind vorteilhafterweise als Faserkoppler ausgebildet, wobei durch die Auskoppelvorrichtung 7 z.B. 20 % des Lichts aus dem Ringresonator ausgekoppelt und über die Koppelvorrichtung 9 z.B. 10 % des Lichts in den Regelkreis 10 eingekoppelt und 90 % dem Ausgang 20 zugeführt werden.

Als Mittel 8 zur Änderung der optischen Weglänge L des Ringresonators 6 eignet sich besonders ein Bauelement mit einem elektrooptisch aktiven Medium, dessen Brechzahl sich bei Anliegen eines elektrischen Feldes ändert. Solche Bauelemente sind z.B. als elektrooptische Phasenmodulatoren bekannt.

Als Mittel 8 zur Änderung der optischen Weglänge L kann auch eine Heiz- und/oder Kühlvorrichtung verwendet werden, die mit dem Ringresonator 6 oder auch nur einem Teil des Faserresonators thermisch gekoppelt und über den Regelkreis 10 ansteuerbar ist. Als besonders vorteilhaft erweist sich hierzu eine speziell um einen Heiz- oder Kühlkern gewickelte optische Faserspule, die ein Bestandteil des Faserresonators 6 ist. Durch eine Temperaturänderung des Ringresonators 6 oder eines Teiles davon kann somit eine Längenänderung des Ringresonators 6 erzielt werden.

Zur Änderung der optischen Weglänge L des Ringresonators 6 kann die Faser auch unterbrochen sein und einen Luftspalt zeigen, was z.B. bei der Verwendung sogenannter GRIN-Linsen, die an den beiden Faserenden angebracht sind, auch reflexionsfrei möglich ist. Eines der beiden Faserenden wird dabei auf einem mechanisch beweglichen Stellglied, z.B. einem piezoelektrischen Stellglied befestigt und der Luftspalt zwischen den beiden Faserenden durch die Bewegung des Stellgliedes verändert. Eine Veränderung des Luftspalts bewirkt dabei eine Änderung der Resonatorlänge. Eine weitere Möglichkeit zur Änderung der optischen Weglänge liegt in der mechanischen Dehnung der Faser oder eines Teils davon, die sowohl eine direkte mechanische Veränderung der Faserlänge als auch Veränderungen der optischen Eigenschaften bewirkt.

Von den Mitteln 8 zur Veränderung der optischen Weglänge des Ringresonators 6 wird bei der Verwendung des Faserringlasers 1 innerhalb eines Nachrichtenübertragungssystems ein Durchstimmbereich von mehr als 100 Wellenlängen der Trägerwellenlänge gefordert.

Der Vorgang der Synchronisation wird nun anhand eines besonders vorteilhaften Regelkreises erläutert. Der Regelkreis 10 enthält zum Regeln des Mittels 8 einen Optisch-Elektrisch-Wandler 11, einen phasenempfindlichen Verstärker 12 und einen Regler 13. Dabei wird im Optisch-Elektrisch-Wandler 11 ein aus dem optischen Ausgangssignal A ausgekoppelter Teil des Lichts optisch-elektrisch gewandelt. Dieses elektrische Signal enthält nun ein Störsignal, das durch die Abweichung zwischen Soll- und Istwert des Signals definiert ist. Das Störsignal hat den Wert Null, wenn Synchronisation vorliegt. Der Wert Null stellt den Sollwert dar. Bei einer Abweichung der Synchronisation zeigt der Istwert den Grad der Abweichung an. Dieses elektrische Signal wird dem Verstärker 12, der als phasenempfindlicher Lock-in-Verstärker ausgebildet ist, zugeführt und dort phasenempfindlich gleichgerichtet. Im nachgeschalteten Regler 13, einem sogenannten PI (D) Regler wird dieses Störsignal idealerweise auf Null kompensiert.

Aufgrund dieses Störsignals kann dem Ausgangssignal des Faserlasers 1 letztlich ein Störsignal entnommen werden, das jeweils das Maß für den Abstand zum Arbeitspunkt des Regelsystems darstellt.

Das Kompensationssignal wird über einen Addierer 15 dem Mittel 8 zur Änderung der optischen Weglänge L des Ringresonators 6 zugeführt. Um das Lock-in-Verfahren nutzen zu können, wird das aus dem Kompensationssignal gewonnene Regelsignal im Addierer 15 mit einem Wobbelsignal, z.B. mit f = 100 Hz, überlagert und das elektrische Signal im Lock-in-Verstärker bei f = 100 Hz phasenempfindlich gleichgerichtet. Durch das Wobbeln, was ein dem Fachmann bekanntes Verfahren darstellt, bei dem ein zu regelndes System geringfügig gestört wird, hier mit der Frequenz von f = 100 Hz, oszilliert der Regelkreises 10 ständig um den optimalen Arbeitspunkt, was zu einer periodischen zweiten Störung führt. Aufgrund der periodischen zweiten Störung läßt sich die Richtung einer ggf. vorliegenden Abweichung der Synchronisation von Modulationsfrequenz und Umlauffrequenz leicht feststellen.

Als Maß für die Qualität für die Synchronisation dient die Amplitude oder die Pulsdauer der einzelnen optischen Pulse. Bei vorliegender Synchronisation entstehen kurze Impulse mit hohen Amplitudenwerten. Bei schlechter Synchronisation laufen die Pulse zeitlich auseinander, was auch zu einer Abnahme der Maximalamplitude führt. Als Meßgröße können somit sowohl Pulsdauer oder auch Maximalamplitude verwendet werden. Als Alternative kann als Maß für die Qualität auch ein integraler Energiemittelwert der einzelnen optischen Pulse verwendet werden, der zur höheren Synchronisation hin zunimmt.

Im Ausführungsbeispiel ist ein Faserringlaser 1 beschrieben, ebensogut kann die Erfindung auch auf einen Faserlaser mit einem linearen Faserresonator angewendet werden. Anstelle der Durchführung der Verlustmodlulation mit einem Mach-Zehnder-Interferometer kann auch ein gewinnmodulierter Laser verwendet werden.

Ferner werden im Ausführungsbeispiel nur die für das Verständnis erforderlichen Teile und Baugruppen erwähnt. Auf weitere Teile und Baugruppen, wie z.B. Polarisationssteller, optische Isolatoren, Polarisatoren oder spezielle Faser, deren Verwendung, Anordnung, Vorteile oder gar Notwendigkeit dem Fachmann, wie z.B. aus der Druckschrift Electronics Letters, 24th October 1991, Vol. 27, No.22, bekannt sind, wurde in der Beschreibung nicht näher eingegangen.

## Patentansprüche

1. Aktiv modengekoppelter Faserlaser (1) zur Erzeugung kurzer Pulse, mit einem optischen Verstärker (5), einem Faserresonator (6), einem Modulator (2) als Takteingang und einem Signalausgang (A), bei dem die Impulsfolgefrequenz der kurzen Pulse durch ein Mittel (8) zur Änderung der optischen Weglänge (L) des Faserresonators (6) auf einen, über den Takteingang (2) zugeführten, externen Takt synchronisiert ist, bei dem das Mittel (8) zur Änderung der optischen Weglänge (L) mit einer Regeleinrichtung (10) verbunden und das Regelsignal für das Mittel (8) zur Änderung der optischen Weglänge (L) aus dem Ausgangssignal des Faserlasers (1) abgeleitet ist, bei dem die Regeleinrichtung (10) einen Optisch-Elektrisch-Wandler (11), einen elektrischen Verstärker (12) und einen Regler (13) enthält, der Optisch-Elektrisch-Wandler (11) über einen Koppler (9) mit dem Signalausgang (A) verbunden ist, um einen Teil des Ausgangssignals in ein elektrisches Signal zu wandeln, das elektrisch gewandelte Signal das ein Störsignal, als Maß für den Grad der Synchronisation, enthält, über den Verstärker (12) geführt ist, das Störsignal im Regler (13) auf ein Minimum kompensiert ist und dabei aus dem Kompensationssignal das Regelsignal für das Mittel (8) zur Änderung der optischen Weglänge abgeleitet wird,
**dadurch gekennzechnet,**
daß der elektrische Verstärker (12) als phasenempfindlicher Verstärker ausgebildet und zur phasenempfindlichen Gleichrichtung des elektrisch gewandelten Signals mit einem Wobbelsignal angesteuert ist, daß im Regler (13) entweder die Amplitude oder der integrale Energiemittelwert der Kurzen Pulse auf ihren maximalen Wert oder die Dauer der Kurzen Pulse auf ihren minimalen Wert ausgeregelt und dabei das Regelsignal erzeugt wird, das mit dem Wobbelsignal moduliert wird.

2. Faserlaser nach Anspruch 1, dadurch gekennzeichnet, daß das Mittel (8) zur Änderung der optischen Weglänge (L) ein elektro-optischer Phasenmodulator ist.

3. Faserlaser nach Anspruch 1, dadurch gekennzeichnet, daß das Mittel (8) zur Änderung der optischen Weglänge (L) ein wenigstens teilweise beheizbarer Faserresonator (6) ist.

4. Faserlaser nach Anspruch 1, dadurch gekennzeichnet, daß das Mittel (8) zur Änderung der optischen Weglänge (L), ein optisches Bauelement mit einem veränderbaren Luftspalt ist.

5. Faserlaser nach Anspruch 1, dadurch gekennzeichnet, daß das Mittel (8) zur Änderung der optischen Weglänge (L) die Faser des Faserresonators (6) wenigstens teilweise mit einem Mittel zum Dehnen der Faser versehen ist.

6. Faserlaser nach Anspruch 1, dadurch gekennzeichnet, daß der Faserresonator ein Ringresonator ist.

## Claims

1. An actively mode-locked fibre laser (1) for the generation of short pulses, with an optical amplifier (5), a fibre resonator (6), a modulator (2) as clock input and a signal output (A), wherein the pulse repetition frequency of the short pulses is synchronised with an external clock, supplied via the clock input (2), by means (8) for changing the optical path length (L) of the fibre resonator (6), where the means (8) for changing the optical path length (L) are connected to a control device (10) and the control signal for the means (8) for changing the optical path length (L) is derived from the output signal of the fibre laser (1), where the control device (10) contains an opto-electrical transducer (11), an electrical amplifier (12) and a controller (13), the opto-electrical transducer (11) is connected via a coupler (9) to the signal output (A) in order to convert a part of the output signal into an electrical signal, the electrically converted signal, which contains an interference signal as a gauge of the degree of synchronisation, is fed across the amplifier (12), the interference signal is compensated to a minimum in the controller (13), and the control signal for the means (8) for changing the optical path length is thereby derived from the compensation signal, characterised in that the electrical amplifier (12) has the form of a phase-sensitive amplifier and for the phase-sensitive rectification of the electrically converted signal is driven by a wobble signal, that in the controller (13) either the amplitude or the integral mean energy value of the short pulses is adjusted to its maximum value or the duration of the short pulses is adjusted to its minimum value, and the control signal, which is modulated with the wobble signal, is thereby generated.

2. A fibre laser according to Claim 1, characterised in that the means (8) for changing the optical path length (L) comprise an electro-optical phase modulator.

3. A fibre laser according to Claim 1, characterised in that the means (8) for changing the optical path length (L) comprise an at least partially heatable fibre resonator (6).

4. A fibre laser according to Claim 1, characterised in that the means (8) for changing the optical path length (L) comprise an optical component with a variable air gap.

5. A fibre laser according to Claim 1, characterised in that the means (8) for changing the optical path length (L) of the fibre of the fibre resonator (6) are provided at least partially with means for elongating the fibre.

6. A fibre laser according to Claim 1, characterised in that the fibre resonator is a ring resonator.

## Revendications

1. Laser à fibres activement verrouillé en phase (1) pour la génération de brèves impulsions, avec un amplificateur optique (5), un résonateur à fibres (6), un modulateur (2) comme entrée de cadence et une sortie de signal (A), pour lequel la fréquence de suite des brèves impulsions est synchronisée par un moyen (8) de modification du trajet optique (L) du résonateur à fibres (6) par rapport à une cadence externe amenée par l'entrée de cadence (2). Sachant que le moyen (8) de modification du trajet optique (L) est relié à un dispositif de réglage (10) et que le signal de réglage pour le moyen (8) de modification du trajet optique (L) est dérivé du signal de sortie du laser à fibres (1). Le dispositif de réglage (10) contient un convertisseur optique/électrique (11), un amplificateur (12) et un régulateur (13). Le convertisseur optique/électrique (11) est relié par un coupleur (9) à la sortie de signal (A) pour convertir une partie du signal de sortie en signal électrique. Le signal électrique converti, qui contient un signal de dérangement comme mesure pour le degré de synchronisation, est dirigé par l'amplificateur (12), le signal de dérangement est compensé à un minimum dans le régulateur (13), et le signal de réglage pour le moyen (8) de modification du trajet optique est dérivé du signal de compensation.
Dispositif caractérisé par le fait
que l'amplificateur électrique (12) est conçu comme amplificateur sensible à la phase et amorcé par un signal de vobulation pour la démodulation sensible à la phase du signal électrique converti, qu'à l'intérieur du régulateur (13) soit l'amplitude, soit la valeur moyenne intégrale d'énergie des brèves impulsions à leur valeur maximale, soit la durée des brèves impulsions à leur valeur minimale sont réglées jusqu'à pleine puissance en créant le signal de réglage qui est modulé avec le signal de vobulation.

2. Laser à fibres selon revendication 1, caractérisé par le fait que le moyen (8) de modification du trajet optique (L) est un modulateur de phases électro-optique.

3. Laser à fibres selon revendication 1, caractérisé par le fait que le moyen (8) de modification du trajet optique (L) est un résonateur à fibres (6) pouvant être au moins partiellement chauffé.

4. Laser à fibres selon revendication 1, caractérisé par le fait que le moyen (8) de modification du trajet optique (L) est un composant optique avec une discontinuité modifiable.

5. Laser à fibres selon revendication 1, caractérisé par le fait que le moyen (8) de modification du trajet optique (L) la fibre du résonateur à fibres (6) dispose au moins en partie d'un moyen pour étirer la fibre.

6. Laser à fibres selon revendication 1, caractérisé par le fait que le résonateur à fibres est un résonateur circulaire.
